# EUROPÄISCHE PATENTANMELDUNG

(11) **EP 1 667 358 A1**
(43) Veröffentlichungstag der Anmeldung: **07.06.2006**
(21) Anmeldenummer: 04106280.3
(22) Anmeldetag: 03.12.2004
(51) Int. Cl.: H04L 12/24, H04L 12/28, H04L 12/26, H04L 29/06

(54) **Verfahren und System zur automatisierten Konfiguration eines Subnetzwerkes innerhalb eines drahtlosen lokalen Netzwerkes**

(71) Anmelder: Swisscom AG, 3000 Bern 29 (CH)
(72) Erfinder: Gilligmann, Benoît, 3074, Muri b. Bern (CH)
(74) Vertreter: BOVARD AG

(57) **Zusammenfassung**

Die Erfindung betrifft ein Verfahren und ein System zur dynamischen Konfiguration eines Subnetzwerkes innerhalb eines drahtlosen lokalen Netzwerkes (9), wobei ein Frequenzkonfigurationsmodul basierend auf Betriebsdaten von mindestens einem Access Point (AP1/AP2/AP3) und/oder von Betriebsdaten von Endgeräten (MT1/MT2) für einen ersten Access Point (AP1/AP2/AP3) eine erste Trägerfrequenz (f₁₁,f₁₂/ f₂₁,f₂₂/ f₃₁,f₃₂) bestimmt und die erste Trägerfrequenz (f₁₁,f₁₂/ f₂₁,f₂₂/ f₃₁,f₃₂) auf dem ersten Access Point (AP1/AP2/AP3) konfiguriert, wobei mittels des Frequenzkonfigurationsmoduls Funkinterferenzen des mindestens einen Access Points (AP1/AP2/AP3) minimiert werden, und wobei der erste Access Point (AP1/AP2/AP3) mittels eines Zugangskonfigurationsmoduls derart konfiguriert wird, dass der erste Access Point (AP1/AP2/AP3) auf der ersten Trägerfrequenz (f₁₁,f₁₂/ f₂₁,f₂₂/ f₃₁,f₃₂) nur von Endgeräten (MT1/MT2) mit einer ersten Netzwerkidentifizierung (SSID₁₁,SSID₁₂/ SSID₂₁,SSID₂₂ SSID₃₁,SSID₃₂) zugreifbar ist.

## Beschreibung

### Technisches Gebiet

Die vorliegende Erfindung betrifft ein Verfahren und ein System zur automatisierten Konfiguration eines Subnetzwerkes innerhalb eines drahtlosen lokalen Netzwerkes, wobei das drahtlose lokale Netzwerk mindestens einen Access Point umfasst. Die Erfindung betrifft insbesondere die automatisierte Konfiguration einer Trägerfrequenz von mindestens einem Access Point sowie eine der Trägerfrequenz zugeordneten und auf einer Netzwerkidentifizierung basierte Zugangskontrolle des mindestens einen Access Points.

### Stand der Technik

Drahtlose lokale Netzwerke, so genannte Wireless Local Area Networks (WLAN), werden immer mehr auch an öffentlich zugänglichen Räumen wie Bahnhöfen, Flughäfen, Restaurants oder Bars verwendet, wo sie insbesondere mobilen Benutzern den drahtlosen Zugang zu Computersystemen, Datenbanken, Kommunikationsnetzen, Datennetzen und insbesondere zum Internet ermöglichen. Die mobilen Benutzer haben mit ihren Endgeräten über einen so genannten Access Point des WLANs Zugang zu einem drahtlosen lokalen Netzwerk. Ein Access Point erfüllt dabei typischerweise eine Bridgefunktion zur Übermittlung von Datenpaketen zwischen dem drahtlosen lokalen Netzwerk und weiteren drahtgebundenen oder drahtlosen Netzwerken. Die Endgeräte sind beispielsweise Laptop- oder Palmtop Computer, die mit einem Kommunikationsmodul für die Kommunikation mit einem drahtlosen lokalen Netzwerk ausgestattet sind. Gegenwärtig ist zum Beispiel die Norm IEEE 802.11 eine häufig verwendete Norm für drahtlose lokale Netzwerke. Die Datenübertragungsgeschwindigkeit, welche von einem Access Point zur Verfügung gestellt wird, beispielsweise gemäss der Norm IEEE 802.11g bis zu 54 Mbit/s, muss zwischen den im Wirkungsbereich des Access Points aktiven Endgeräten aufgeteilt werden. Sobald von einer Vielzahl von Endgeräten auf einen bestimmten Access Point zugegriffen wird, reduziert sich die einem bestimmten Endgerät zur Verfügung stehende Datenübertragungsgeschwindigkeit entsprechend der Anzahl Endgeräte. Der Zugang zu einem Access Point kann beispielsweise mittels eines elektronischen Schlüssels, wie beispielsweise einem Benutzernamen und einem Passwort, geschützt werden, womit dieser Access Point nur für bestimmbare Endgeräte mit einem gültigen elektronischen Schlüssel zugreifbar ist. Um den drahtlosen Zugang zu Kommunikationsnetzen flächendeckend in einem ausgedehnten geografischen Bereich zu ermöglichen, werden mehrere Access Points vorgesehen, die jeweils einen Teilbereich abdecken. Typischerweise überlappen sich die Funkbereiche von benachbarten Access Points. Obwohl Access Points über mehrere selektierbare Funkkanäle mit verschiedenen Trägerfrequenzen verfügen, treten trotzdem oft Interferenzprobleme zwischen benachbarten Access Points auf, einerseits weil die Anzahl der verfügbaren Funkkanäle begrenzt ist und andererseits weil die Signalbandbreiten der verschiedenen Funkkanäle sich zum Teil überlappen können. Der gegenwärtig verwendete Frequenzplan gemäss der Norm IEEE 802.11 sieht elf oder dreizehn Funkkanäle vor, deren Signalbandbreiten sich teilweise überlappen. Es sind nur drei Funkkanäle vorgesehen, die sich gegenseitig nicht stören: in Europa sind dies üblicherweise die Funkkanäle 1, 7 und 13, in den USA sind dies üblicherweise die Funkkanäle 1, 6 und 11. Die Auswirkungen von Funkinterferenzen werden zwar durch spezielle Mechanismen für den Medienzugriff gemildert, beispielsweise durch Carrier Sense Multiple Access/Collision Avoidance (CSMA/CA), dies geschieht jedoch zu Lasten der Datenübertragungsgeschwindigkeit. Um zu vermeiden, dass sich benachbarte Access Points gegenseitig durch Funkinterferenzen stören, werden Access Points beispielsweise unter Zuhilfenahme von Simulationsprogrammen positioniert, die den Verlauf von elektromagnetischen Feldern modellieren. Solche Simulationsprogramme benötigen jedoch eine detaillierte Beschreibung der Umgebung und der Topologie. Solche Verfahren sind nicht besonders geeignet für die Berücksichtigung des sich dynamisch verändernden Verkehrs in einem drahtlosen lokalen Netzwerk und bieten keine Möglichkeiten, bereits positionierte Access Points an geänderte Verhältnisse anzupassen. Geänderte Verhältnisse können insbesondere die Access Points an sich, wie beispielsweise vorübergehende bauliche Massnahmen wie z.B. das Aufstellen von Messeständen in einer Messehalle, als auch Veränderungen in Bezug auf die Endgeräte, wie beispielsweise eine Veränderung der Anzahl Endgeräte innerhalb des Wirkungsbereichs eines Access Points oder Veränderungen in der Position eines Endgeräts, betreffen. Geänderte Verhältnisse können aber auch technische Voraussetzungen für ein Endgerät, wie beispielsweise Quality of Service (QoS) Bedingungen wie z.B. eine maximal zulässige Verzögerung einer von dem Endgerät des drahtlosen Lokalnetzes ausgehenden oder dort ankommenden Sprachdatenverbindung, betreffen. Zurzeit ist es im Stand der Technik nicht möglich, beispielsweise QoS Bedingungen einer Datenverbindung eines drahtlosen lokalen Netzwerks dynamisch an geänderte Verhältnisse anzupassen.

In der Patentanmeldung WO 2004/019647 wird eine Methode zur Optimierung eines drahtlosen Lokalnetzes mittels einer dynamischen Auswahl eines Kommunikationskanals zwischen einem Access Point und verschiedenen mobilen Terminals beschrieben. Die Methode umfasst die Schritte der Messung der Qualität von Kommunikationskanälen zwischen dem Access Point und verschiedenen mobilen Terminals, der Übertragung dieser Messungen zum Access Point und der Auswahl eines geeigneten Kommunikationskanals durch den Access Point. Diese Methode hat insbesondere den Nachteil, dass QoS Bedingungen einer Datenverbindung nicht dynamisch an geänderte Verhältnisse innerhalb eines drahtlosen lokalen Netzwerks anpassbar sind.

### Offenbarung der Erfindung

Es ist eine Aufgabe der vorliegenden Erfindung, ein neues Verfahren und ein neues System zur dynamischen Konfiguration eines Subnetzwerks innerhalb eines drahtlosen lokalen Netzwerks vorzuschlagen, welche nicht die Nachteile des Standes der Technik aufweisen und welche es insbesondere ermöglichen, QoS Bedingungen an eine Datenverbindung dynamisch an geänderte Verhältnisse innerhalb eines drahtlosen lokalen Netzwerks anzupassen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zur dynamischen Konfiguration eines Subnetzwerkes innerhalb eines drahtlosen lokalen Netzwerkes, wobei das drahtlose lokale Netzwerk einen oder mehrere von Endgeräten über Funksignale mit bestimmten Trägerfrequenzen zugreifbare Access Points umfasst, wobei innerhalb des drahtlosen lokalen Netzwerkes ein durch auf den Access Point konfigurierte Trägerfrequenzen erzeugtes und/oder durch weitere Funksignale erzeugtes Funkfrequenzspektrum vorhanden ist, ein Frequenzkonfigurationsmodul basierend auf Betriebsdaten des einen oder der mehreren Access Points und/oder von Betriebsdaten von Endgeräten für einen bestimmten Access Point eine weitere Trägerfrequenz bestimmt und die weitere Trägerfrequenz auf dem bestimmten Access Point konfiguriert, wobei mittels des Frequenzkonfigurationsmoduls Funkinterferenzen zwischen der weiteren Trägerfrequenz und dem innerhalb des drahtlosen Netzwerkes vorhandenen Funkfrequenzspektrum minimiert werden, und wobei der bestimmte Access Point mittels eines Zugangskonfigurationsmoduls derart konfiguriert wird, dass der bestimmte Access Point auf der weiteren Trägerfrequenz nur von Endgeräten mit einer entsprechenden Netzwerkidentifizierung zugreifbar ist. Ein solches Verfahren hat insbesondere den Vorteil, dass zwischen dem Access Point und dem Endgerät eine Datenverbindung mit definierbaren QoS Bedingungen herstellbar ist. Betriebsdaten des mindestens einen Access Points können beispielsweise eine Trägerfrequenz und die Anzahl auf dieser Trägerfrequenz aktiver Endgeräte umfassen. Falls es beispielsweise die Anzahl aktiver Endgeräte nicht erlaubt, Datenverbindungen mit bestimmten QoS Bedingungen zu ermöglichen, dann wird durch das Frequenzwechselmodul eine weitere Trägerfrequenz konfiguriert, wobei bei der Auswahl der weiteren Trägerfrequenz berücksichtigt wird, dass Funkinterferenzen zwischen der weiteren Trägerfrequenz und dem innerhalb des drahtlosen lokalen Netzwerk vorhandenen Funkfrequenzspektrum minimiert werden. Es wird anschliessend eine Zugangskontrolle derart konfiguriert, dass der Access Point auf dieser weiteren Trägerfrequenz nur von Endgeräten mit einer entsprechenden Netzwerkidentifizierung zugreifbar ist. Mittels der weiteren Trägerfrequenz und der Netzwerkidentifizierung wird ein Subnetzwerk gebildet, wobei beispielsweise definierbar ist, welche Endgeräte auf dieses Subnetzwerk zugreifen können und womit QoS Bedingungen an Datenverbindungen zwischen einem Endgerät und einem Access Point exakt definierbar sind.

In einer Ausführungsvariante wird die weitere Trägerfrequenz ausschliesslich basierend auf Betriebsdaten von einem oder mehreren Access Points bestimmt. Ein solches Verfahren hat den Vorteil, dass bestehende drahtlose lokale Netzwerke leicht mit dem erfindungsgemässen Verfahren ergänzt werden können und dass weder auf den Access Points noch auf den Endgeräten zusätzliche Hardware oder Software installiert werden muss. Betriebsdaten eines Access Points können beispielsweise mittels eines Zentralmoduls, welches z.B. auf einem mit den Access Points verbindbaren Zentralrechner implementiert wird, beispielsweise über SNMP (Simple Network Management Protocol) Schnittstellen erfasst werden. Das erfindungsgemässe Verfahren kann mittels eines geeignet ausgestalteten Zentralmoduls durchgeführt werden, wobei Konfigurationen der Access Points beispielsweise über SNMP Schnittstellen erfolgen können.

In einer weiteren Ausführungsvariante wird die weitere Trägerfrequenz basierend auf mindestens einer aktuellen Trägerfrequenz und/oder einer Benutzungsrate und/oder einer Störungsrate und/oder einer Benutzungswahrscheinlichkeit von Access Points bestimmt. Ein solches Verfahren hat u.a. den Vorteil, dass die Betriebsdaten auf Daten beruhen, welche von bestehenden Access Points und/oder Endgeräten typischerweise erfasst werden oder dass die Betriebsdaten auf Daten beruhen, welche von typischerweise erfassten Daten leicht ableitbar sind. Dabei ist die aktuelle Trägerfrequenz eines Access Points oder eines Endgeräts typischerweise direkt abrufbar. Die Benutzungsrate ist beispielsweise als Quotient zwischen der aktuell übertragenen Datenmenge zu der theoretisch verfügbaren Datenmenge innerhalb eines bestimmbaren Zeitintervalls definierbar. Die Störungsrate ist beispielsweise als Anzahl empfangener fehlerhafter Datenpakete innerhalb eines bestimmbaren Zeitintervalls definierbar. Die Benutzungswahrscheinlichkeit ist beispielsweise als Anzahl aktive Endgeräte innerhalb eines bestimmbaren Zeitintervalls definierbar.

In einer weiteren Ausführungsvariante wird die weitere Trägerfrequenz basierend auf einer Messung des innerhalb des drahtlosen lokalen Netzwerkes vorhandenen Frequenzspektrums bestimmt. Eine solche Messung kann beispielsweise mittels in Access Points und/oder Endgeräten angebrachter Mittel zum Empfang von Funksignalen erfolgen. Diese Ausführungsvariante hat insbesondere den Vorteil, dass das innerhalb des drahtlosen lokalen Netzwerks vorhandene Funkfrequenzspektrum ausmessbar ist und bei der Minimierung von Funkinterferenzen somit auch Funksignale von weiteren Geräten wie z.B. von Bluetooth Geräten, Mikrowellen-Geräten, etc. berücksichtigbar sind.

In einer anderen Ausführungsvariante wird als Netzwerkidentifizierung mindestens ein so genannter Service Set Identifier (SSID) verwendet. Ein solches Verfahren hat u.a. den Vorteil, dass als Netzwerkidentifizierung eine auf vielen Access Points und Netzwerkendgeräten implementierte Netzwerkidentifizierung verwendbar ist.

In einer Ausführungsvariante wird die Netzwerkidentifizierung mittels mindestens eines elektronischen Schlüssels verschlüsselt. Ein elektronischer Schlüssel kann beispielsweise auf einem symmetrischen Schlüssel wie z.B. auf einem Geheimnis wie einem Passwort oder beispielsweise auf einem asymmetrischen Schlüssel wie z.B. auf einem public key und einem private key Schlüsselpaar basieren. Ein solches Verfahren hat u.a. den Vorteil, dass die Sicherheit beim Zugriff auf den Access Point stark erhöht werden kann und damit beispielsweise QoS Bedingungen genauer erfüllt werden können.

In einer anderen Ausführungsvariante markieren die Access Points Datenpakete mit einem einer Netzwerkidentifizierung entsprechenden QoS Tag oder VLAN Tag. Der QoS Tag oder VLAN Tag kann sich beispielsweise auf eine DiffServ (Differentiated Services) Architektur oder auf eine MPLS (Multi Protocol Label Switching) Architektur beziehen. Wie erwähnt, erfüllt ein Access Point typischerweise eine Bridgefunktion zur Übermittlung von Datenpaketen zwischen dem drahtlosen lokalen Netzwerk und weiteren drahtgebundenen oder drahtlosen Netzwerken. Ein solches Verfahren hat deshalb u.a. den Vorteil, dass Datenpakete auf diesen weiteren drahtgebundenen oder drahtlosen Netzwerken gemäss spezifizierbaren QoS Bedingungen unter Verwendung von bekannten Architekturen vermittelbar sind.

In einer weiteren Ausführungsvariante wird ein Access Point mittels des Zugangskonfigurationsmoduls derart konfiguriert, dass der Access Point an Endgeräte mit einer vorkonfigurierten oder ohne Netzwerkidentifizierung eine Meldung mit Daten eines potentiell zugreifbaren Access Points übermittelt. Beispielsweise kann das erwähnte Zentralmodul so ausgeführt sein, dass mittels des Zentralmoduls dynamisch eine Datenbank mit verfügbaren Access Points nachgeführt wird, wobei beispielsweise für jeden Access Point eine Wahrscheinlichkeit bestimmt wird, mit welcher ein Endgerät, welches auf einen ersten Access Point zugreifen möchte, potentiell auch auf weitere Access Points zugreifen könnte. Ein solches Verfahren hat u.a. den Vorteil, dass Endgeräten mit einer vorkonfigurierten Netzwerkidentifizierung zusätzliche Daten für einen schnelleren Aufbau eines Zugriffs auf das drahtlose lokale Netzwerk übermittelbar sind.

In einer anderen Ausführungsvariante wird ein Access Point mittels des Zugangskonfigurationsmoduls derart konfiguriert, dass für Endgeräte mit einer vorkonfigurierten Netzwerkidentifizierung auf dem mindestens einen Access Point eine entsprechende Trägerfrequenz konfiguriert wird, wobei Endgeräte mit der vorkonfigurierten Netzwerkidentifizierung über die entsprechende Trägerfrequenz auf den Access Point zugreifen. Diese Ausführungsvariante lässt sich ferner auch so ausgestalten, dass bei der Konfiguration der Trägerfrequenz auch Funkinterferenzen minimiert werden und dass mittels einer Zugangskontrolle der Access Point auf der Trägerfrequenz nur von Endgeräten mit der vorkonfigurierten Netzwerkidentifizierung zugreifbar ist. Beispielsweise wird von einem ersten Access Point detektiert, dass ein Endgerät versucht, auf den ersten Access Point zuzugreifen. Der Access Point teilt dies beispielsweise dem erwähnten Zentralmodul mit, welches derart ausgestaltet ist, dass auf dem ersten Access Point oder einem geeigneten weiteren Access Point eine Trägerfrequenz für den Zugriff des Endgeräts auf das drahtlose lokale Netzwerk konfiguriert.

In einer Ausführungsvariante schaltet das Frequenzkonfigurationsmodul basierend auf Betriebsdaten eines Access Points und/oder von Betriebsdaten von Endgeräten eine bestimmbare Trägerfrequenz ab. Eine Abschaltung kann beispielsweise für Trägerfrequenzen mit einer geringen Benutzungswahrscheinlichkeit erfolgen. Diese Ausführungsvariante hat u.a. den Vorteil, dass unbenötigte Netzwerk-Ressourcen z.B. für eine Weiterverwendung oder zur Verringerung von Funkinterferenzen freigegeben werden können.

In einer weiteren Ausführungsvariante konfiguriert das Frequenzkonfigurationsmodul zu bestimmbaren Zeitpunkten auf einem Access Point eine temporäre Trägerfrequenz zur Detektion von Endgeräten. Diese Ausführungsvariante hat u.a. den Vorteil, dass Endgeräte beispielsweise trotz abgeschalteter Trägerfrequenz detektierbar bleiben.

### Kurze Beschreibung der Zeichnung

Nachfolgend werden Ausführungsvarianten der vorliegenden Erfindung anhand von Beispielen beschrieben. Die Beispiele der Ausführungen werden durch folgende beigelegte Figur illustriert:

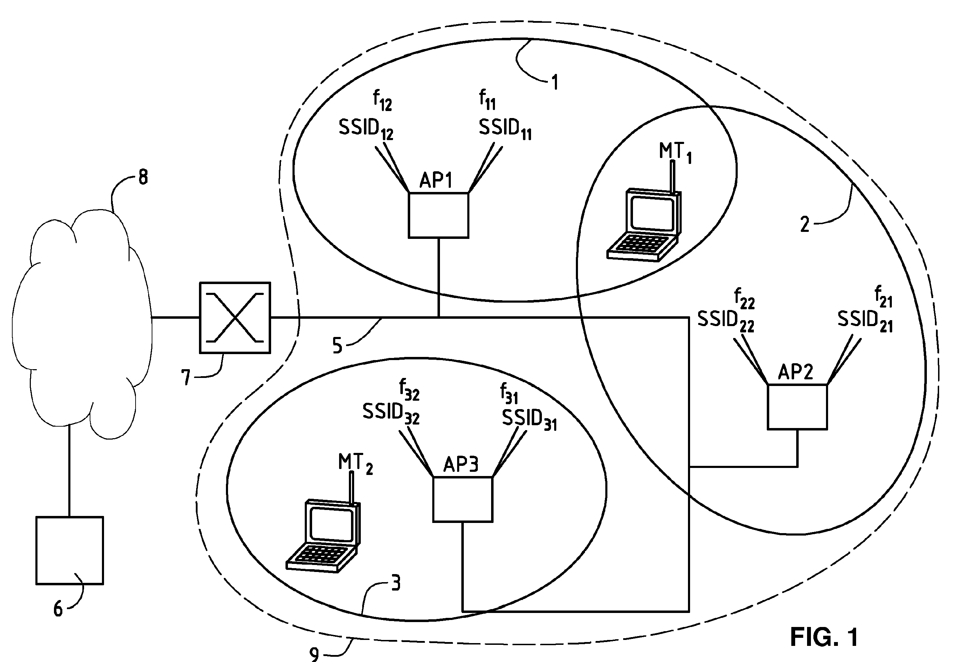

Figur 1 zeigt ein Blockdiagramm, welches schematisch ein drahtloses lokales Netzwerk mit mehreren Access Points darstellt, die über drahtgebundene Verbindungen einem weiteren Netzwerk wie dem Internet verbunden sind.

### Ausführungsform(en) der Erfindung

In Figur 1 bezeichnet das Bezugszeichen 9 ein drahtloses lokales Netzwerk, ein so genanntes WLAN. Die Bezugszeichen AP1, AP2 und AP3 bezeichnen Access Points, welche Benutzern mit entsprechenden Endgeräten MT1 oder MT2 den Zugang zum drahtlosen lokalen Netzwerk ermöglichen. An dieser Stelle sei erwähnt, dass ein WLAN eine beliebige Anzahl Access Points und Endgeräte umfassen kann und dass sich die Erfindung nicht auf das hier ausgeführte Beispiel mit drei Access Points und zwei Endgeräten beschränkt. Die Access Points AP1, AP2, AP3 können beispielsweise den drahtlosen Zugriff für Endgeräte gemäss der Norm IEEE 802.11, gemäss dem Bluetooth Standard oder gemäss irgendeiner anderen funkbasierten Norm ermöglichen. Die Endgeräte sind typischerweise mobile Endgeräte (Mobile Terminal, MT) wie Laptop-Computer, Personal Digital Assistant (PDA) Computer oder irgendwelche andere Endgeräte, welche über eine Schnittstelle für den drahtlosen Zugriff auf die Access Points AP1, AP2, AP3 verfügen. Die Endgeräte MT1, MT2 können aber auch festinstallierte Endgeräte wie beispielsweise Personal Computer, welche z.B. während einer Messe installiert werden, umfassen.

Wie in Figur 1 dargestellt, sind die Access Points AP1, AP2 und AP3 über Kommunikationsverbindungen 5 mit weiteren Netzwerkkomponenten wie beispielsweise über einen Router 7 mit einem Netzwerk 8, beispielsweise mit dem Internet oder irgendeinem anderen Netzwerk, verbunden. Die Kommunikationsverbindungen 5 sind drahtgebundene Verbindungen, wie Kommunikationsbusverbindungen oder Festnetzverbindungen, oder drahtlose Verbindungen, die jeweils die Übermittlung von Daten zwischen den Access Points AP1, AP2, AP3 und dem Router 7 ermöglichen. Die Kommunikationsverbindung 5 ist beispielsweise eine Kommunikationsverbindung gemäss dem Ethernet Standard, einem Token Ring Standard oder gemäss irgendeinem anderen Standard zur Netzwerkverbindung von Kommunikationsgeräten.

In Figur 1 bezeichnet das Bezugszeichen 6 ein Zentralmodul zur mindestens teilweisen Steuerung des erfindungsgemässen Verfahrens. Das Zentralmodul 6 ist beispielsweise als programmiertes Softwaremodul ausgeführt, beispielsweise als ein in Java programmiertes Softwaremodul, welches auf einem Computer, beispielsweise auf einem mit dem Netzwerk 8 verbindbaren Personal Computer, als Softwareprogramm abläuft. Der Fachmann wird verstehen, dass das Zentralmodul 6 ganz oder zum Teil hardwaremässig, beispielsweise mittels geeigneten elektronischen Bauteilen, ausgeführt werden kann. Das Zentralmodul 6 kann insbesondere auch an irgendeiner anderen als der in Figur 1 gezeichneten Stelle, wie beispielsweise an der Kommunikationsverbindung 5, in einem Access Point AP1, AP2, AP3 oder im Router 7, angebracht sein. Das Zentralmodul 6 kann ganz oder teilweise als verteiltes Softwaremodul aufgebaut sein, beispielsweise als über mehrere Access Points, Endgeräte und/oder Router verteilte und untereinander verbindbare Software- und/oder Hardwaremodule. Die Kommunikation zwischen dem Zentralmodul 6 und weiterer Netzwerkkomponenten wie beispielsweise den Access Points AP1, AP2, AP2 erfolgt beispielsweise über das SNMP (Simple Network Management Protocol) Protokoll oder über irgendein anderes Protokoll zur Kommunikation zwischen Netzwerkendgeräten. Wie nachfolgend erläutert, umfasst das Zentralmodul 6 insbesondere ein Frequenzkonfigurationsmodul und ein Zugangskonfigurationsmodul.

In einem ersten Beispiel umfasst das drahtlose lokale Netzwerk 9 einen einzelnen Access Point AP1. Mittels eines Frequenzkonfigurationsmoduls erfasst das Zentralmodul 6 beispielsweise mittels entsprechender SNMP Meldungen die auf dem Access Point AP1 konfigurierten Trägerfrequenzen und speichert diese in einer geeigneten Datenbank des Zentralmoduls 6 ab. In diesem ersten Beispiel sei die dem Kanal 1 zugeordnete Trägerfrequenz der Norm IEEE 802.11 auf dem Access Point AP1 konfiguriert. Beispielsweise, sobald der Access Point AP1 ein Endgerät MT1 im Wirkungsbereich des Access Points AP1 detektiert, wird das Verfahren zur dynamischen Konfiguration eines Subnetzwerks innerhalb des drahtlosen lokalen Netzwerks 9 durchgeführt. Basierend auf den abgespeicherten Trägerfrequenzen bestimmt das Frequenzkonfigurationsmodul eine weitere Trägerfrequenz f₁₁ derart, dass Funkinterferenzen zwischen der weiteren Trägerfrequenz und bestehender Trägerfrequenzen des Access Points AP1 minimiert werden. Beispielsweise werde durch das Frequenzkonfigurationsmodul die dem Kanal 7 zugeordnete Trägerfrequenz der Norm IEEE 802.11 bestimmt und anschliessend mittels einer geeigneten SNMP Meldung des Frequenzkonfigurationsmoduls an den Access Point AP1 auf dem Access Point AP1 konfiguriert. Mittels eines Zugangskonfigurationsmoduls wird der Access Point AP1, beispielsweise wiederum mittels einer geeigneten SNMP Meldung des Zugangskonfigurationsmoduls an den Access Point AP1, derart konfiguriert, dass der Access Point AP1 auf der Trägerfrequenz f₁₁ nur von Endgeräten mit einer entsprechenden Netzwerkidentifizierung SSID₁₁ zugreifbar ist und womit das Subnetzwerk innerhalb des drahtlosen lokalen Netzwerks konfiguriert ist. Je nach erforderlichen Bedingungen wie beispielsweise Sicherheitsbedingungen, Verfügbarkeitsbedingungen, QoS Bedingungen oder irgendwelchen anderen Bedingungen kann die Auswahl der Netzwerkidentifizierung SSID₁₁ beispielsweise gemäss im Zentralmodul 6 abgespeicherten Netzwerkidentifizierungen, gemäss einer Netzwerkidentifizierung des Endgeräts MT1 oder gemäss irgendeiner anderen Methode erfolgen. Beispielsweise kann im Zentralmodul 6 die MAC (Medium Access Control) Adresse des Endgeräts MT1 abgespeichert sein, wobei der Access Point AP1 durch das Zugangskonfigurationsmodul derart konfiguriert wird, dass der Access Point AP1 auf der Trägerfrequenz f₁₁ nur vom Endgerät MT1 zugreifbar ist.

In einem weiteren Beispiel umfasst das drahtlose lokale Netzwerk 9 die Access Points AP1 und AP2. Die Wirkungsbereiche dieser beiden Access Points überschneiden sich im Bereich des momentanen Standorts eines Endgeräts MT1. Je nach konfigurierten Trägerfrequenzen der Access Points AP1 und AP2 ist deshalb von Funkinterferenzen zwischen den beiden Access Points auszugehen. Mittels eines Frequenzkonfigurationsmoduls erfasst das Zentralmodul 6 Betriebsdaten der Access Points AP1 und AP2. Betriebsdaten können beispielsweise konfigurierte Trägerfrequenzen, die Benutzungsrate, die Störungsrate oder die Benutzungswahrscheinlichkeit eines Access Points umfassen. Die Benutzungsrate ist beispielsweise als die Anzahl während einer bestimmbaren Zeiteinheit erfolgreich übertragener Datenpakete definiert. Die Störungsrate ist beispielsweise als die Anzahl während einer bestimmbaren Zeiteinheit übertragener fehlerhafter Datenpakete definiert, welche beispielsweise infolge einer Kollision nicht erfolgreich übertragen werden konnten. Die Benutzungswahrscheinlichkeit ist beispielsweise als die Anzahl während einer bestimmbaren Zeiteinheit im Wirkungsbereich des Access Points detektierbarer Endgeräte definiert. Neben der hier beispielhaft beschriebenen Benutzungsrate, Störungsrate oder Benutzungswahrscheinlichkeit ist eine grosse Vielzahl für den Fachmann nahe liegende Betriebsdaten wie die momentane maximale oder durchschnittliche Datendurchsatzgeschwindigkeit, die konfigurierte Funk-Übertragungsleistung u.ä. verwendbar. Es ist beispielsweise von Vorteil, dass Betriebsdaten eines Access Points für jede der auf dem Access Point konfigurierbaren Trägerfrequenzen einzeln erfasst wird. Es ist auch von Vorteil, dass Betriebsdaten über längere Zeitintervalle wie beispielsweise über mehrere Tage aufgezeichnet werden. In dem hier beschriebenen Beispiel versuche nun das Endgerät MT1 unter Verwendung einer Netzwerkidentifizierung SSID₂₂ auf das drahtlose lokale Netzwerk 9 zuzugreifen. Dabei habe der Access Point AP2 keine Trägerfrequenz konfiguriert und der Access Point AP1 sei nur auf einer Trägerfrequenz f₁₁ unter Verwendung der Netzwerkidentifizierung SSID₁₁ zugreifbar. Da auf dem Access Point AP2 keine Trägerfrequenz konfiguriert ist, lässt sich über den Access Point AP2 das Endgerät MT1 nicht detektieren. Hingegen ist das Endgerät MT1 über den Access Point AP1 detektierbar, womit der Access Point AP1 dem Zentralmodul 6 beispielsweise mittels einer geeigneten SNMP Meldung signalisieren kann, dass ein Endgerät MT1 versucht, auf das drahtlose lokale Netzwerk 9 zuzugreifen. Das Zentralmodul 6 kann mittels des erfindungsgemässen Verfahrens beispielsweise auf dem Access Point AP1 ein Subnetzwerk für den Zugriff des Endgeräts MT1 auf das drahtlose lokale Netzwerk 9 konfigurieren. Das Zentralmodul 6 kann aber beispielsweise auch auf allen anderen Access Points AP2, AP3, etc. ein Subnetzwerk für den Zugriff des Endgeräts MT1 auf das drahtlose lokale Netzwerk 9 konfigurieren, wobei die Subnetzwerke beispielsweise mit einem Timeout-Wert versehen werden, wobei nach Ablauf des Timeout-Werts beispielsweise durch das Zentralmodul 6 kontrolliert wird, ob das Subnetzwerk verwendet wurde, und wobei das Subnetzwerk nach Ablauf des Timeout-Werts gegebenenfalls wieder abgeschaltet wird.

Die erfindungsgemässe Bestimmung einer auf Betriebsdaten des Access Points und/oder Endgeräts basierten Trägerfrequenz kann beispielsweise auf der Aufzeichnung der Störungsrate der verschiedenen konfigurierbaren Trägerfrequenzen eines Access Points basieren, wobei bei der Bestimmung einer Trägerfrequenz jeweils die Trägerfrequenz mit der geringsten Störungsrate verwendet wird. Die Bestimmung einer Trägerfrequenz kann aber auch auf einer Messung der Verbindungsqualität zwischen einem Access Point und einem Endgerät basieren, wobei für bestimmbare Trägerfrequenzen beispielsweise die maximale Datendurchsatzgeschwindigkeit zwischen dem Access Point und dem Endgerät gemessen wird, und wobei bei der Bestimmung einer Trägerfrequenz jeweils die Trägerfrequenz mit der höchsten maximalen Datendurchsatzgeschwindigkeit verwendet wird.

## Patentansprüche

1. Verfahren zur dynamischen Konfiguration eines Subnetzwerkes innerhalb eines drahtlosen lokalen Netzwerkes (9), wobei das drahtlose lokale Netzwerk (9) einen oder mehrere von Endgeräten (MT1/MT2) über Funksignale mit bestimmten Trägerfrequenzen (f₁₁,f₁₂/ f₂₁,f₂₂/ f₃₁,f₃₂) zugreifbare Access Points (AP1/AP2/AP3) umfasst, und wobei innerhalb des drahtlosen lokalen Netzwerkes (9) ein durch auf den Access Points (AP1/AP2/AP3) konfigurierte Trägerfrequenzen (f₁₁,f₁₂/ f₂₁,f₂₂/ f₃₁,f₃₂) erzeugtes und/oder durch weitere Funksignale erzeugtes Funkfrequenzspektrum vorhanden ist, **dadurch gekennzeichnet,**
**dass** ein Frequenzkonfigurationsmodul basierend auf Betriebsdaten des einen oder der mehreren Access Points (AP1/AP2/AP3) und/oder von Betriebsdaten von Endgeräten (MT1/MT2) für einen bestimmten Access Point (AP1/AP2/AP3) eine weitere Trägerfrequenz (f₁₁,f₁₂/ f₂₁,f₂₂/ f₃₁,f₃₂) bestimmt und die weitere Trägerfrequenz (f₁₁,f₁₂/ f₂₁,f₂₂/ f₃₁,f₃₂) auf dem bestimmten Access Point (AP1/AP2/AP3) konfiguriert, wobei mittels des Frequenzkonfigurationsmoduls Funkinterferenzen zwischen der weiteren Trägerfrequenz und dem innerhalb des drahtlosen Netzwerkes (9) vorhandenen Funkfrequenzspektrum minimiert werden, und
**dass** der bestimmte Access Point (AP1/AP2/AP3) mittels eines Zugangskonfigurationsmoduls derart konfiguriert wird, dass der bestimmte Access Point (AP1/AP2/AP3) auf der weiteren Trägerfrequenz (f₁₁,f₁₂/ f₂₁,f₂₂/f₃₁,f₃₂) nur von Endgeräten (MT1/MT2) mit einer entsprechenden Netzwerkidentifizierung (SSID₁₁,SSID₁₂/ SSID₂₁,SSID₂₂ SSID₃₁,SSID₃₂) zugreifbar ist.

2. Verfahren nach Anspruch 1, **dadurch gekennzeichnet, dass** die weitere Trägerfrequenz (f₁₁,f₁₂/ f₂₁,f₂₂/ f₃₁,f₃₂) ausschliesslich basierend auf Betriebsdaten von Access Points (AP1/AP2/AP3) bestimmt wird.

3. Verfahren nach einem der Ansprüche 1 bis 2, **dadurch gekennzeichnet, dass** die weitere Trägerfrequenz (f₁₁,f₁₂/ f₂₁,f₂₂/ f₃₁,f₃₂) basierend auf mindestens einer aktuellen Trägerfrequenz und/oder einer Benutzungsrate und/oder einer Störungsrate und/oder einer Benutzungswahrscheinlichkeit der Access Points (AP1/AP2/AP3) und/oder der Endgeräte (MT1/MT2) bestimmt wird.

4. Verfahren nach einem der Ansprüche 1 bis 3, **dadurch gekennzeichnet, dass** die weitere Trägerfrequenz (f₁₁,f₁₂/ f₂₁,f₂₂/ f₃₁,f₃₂) basierend auf einer Messung des innerhalb des drahtlosen lokalen Netzwerkes vorhandenen Frequenzspektrums bestimmt wird.

5. Verfahren nach einem der Ansprüche 1 bis 4, **dadurch gekennzeichnet, dass** als Netzwerkidentifizierung (SSID₁₁,SSID₁₂/SSID₂₁,SSID₂₂ SSID₃₁,SSID₃₂) mindestens ein Service Set Identifier (SSID) verwendet wird.

6. Verfahren nach einem der Ansprüche 1 bis 5, **dadurch gekennzeichnet, dass** die Netzwerkidentifizierung (SSID₁₁,SSID₁₂/SSID₂₁,SSID₂₂ SSID₃₁,SSID₃₂) mittels mindestens einem elektronischen Schlüssel verschlüsselt wird.

7. Verfahren nach einem der Ansprüche 5 bis 6, **dadurch gekennzeichnet, dass** ein oder mehrere Access Points (AP1/AP2/AP3) Datenpakete mit einem der ersten Netzwerkidentifizierung entsprechenden QoS Tag oder VLAN Tag markiert.

8. Verfahren nach einem der Ansprüche 1 bis 7, **dadurch gekennzeichnet, dass** ein oder mehrere Access Points (AP1/AP2/AP3) mittels des Zugangskonfigurationsmoduls derart konfiguriert wird, dass der Access Point an Endgeräte mit einer vorkonfigurierten oder ohne Netzwerkidentifizierung eine Meldung mit Daten eines potentiell zugreifbaren Access Points (AP1/AP2/AP3) übermittelt.

9. Verfahren nach einem der Ansprüche 1 bis 8, **dadurch gekennzeichnet, dass** ein oder mehrere Access Points (AP1/AP2/AP3) mittels des Zugangskonfigurationsmoduls derart konfiguriert wird, dass für ein Endgerät (MT1/MT2) mit einer vorkonfigurierten Netzwerkidentifizierung auf dem Access Point eine entsprechende Trägerfrequenz mit einer entsprechenden Zugangskontrolle konfiguriert wird, wobei das Endgerät (MT1/MT2) mit der vorkonfigurierten Netzwerkidentifizierung über die entsprechende Trägerfrequenz auf den Access Point (AP1/AP2/AP3) zugreift.

10. Verfahren nach einem der Ansprüche 1 bis 9, **dadurch gekennzeichnet, dass** das Frequenzkonfigurationsmodul basierend auf Betriebsdaten von einem oder mehreren Access Points (AP1/AP2/AP3) und/oder von Betriebsdaten von Endgeräten (MT1/MT2) eine bestimmbare Trägerfrequenz abschaltet.

11. Verfahren nach einem der Ansprüche 1 bis 10, **dadurch gekennzeichnet, dass** das Frequenzkonfigurationsmodul auf einem oder mehreren Access Points (AP1/AP2/AP3) zu bestimmbaren Zeitpunkten eine temporäre Trägerfrequenz zur Detektion von Endgeräten (MT1/MT2) konfiguriert.

12. System zur dynamischen Konfiguration eines Subnetzwerkes innerhalb eines drahtlosen lokalen Netzwerkes (9), wobei das drahtlose lokale Netzwerk (9) einen oder mehrere von Endgeräten (MT1/MT2) zugreifbare Access Points (AP1/AP2/AP3) umfasst, **dadurch gekennzeichnet,**
**dass** ein Frequenzkonfigurationsmodul Mittel umfasst zur Erfassung und Abspeicherung von Betriebsdaten des einen oder der mehreren Access Points (AP1/AP2/AP3) und/oder von Betriebsdaten von Endgeräten (MT1/MT2),
**dass** das Frequenzkonfigurationsmodul Mittel umfasst zur Bestimmung einer Trägerfrequenz (f₁₁,f₁₂/ f₂₁,f₂₂/ f₃₁,f₃₂) und zur Konfiguration dieser Trägerfrequenz auf einem Access Point (AP1/AP2/AP3), wobei die Mittel zur Bestimmung der Trägerfrequenz derart ausgelegt sind, dass Funkinterferenzen zwischen der Trägerfrequenz und einem innerhalb dem drahtlosen lokalen Netzwerk vorhandenen Funkfrequenzspektrum minimierbar sind,
**dass** ein Zugangskonfigurationsmodul Mittel umfasst, um auf dem Access Point (AP1/AP2/AP3) eine der konfigurierten Trägerfrequenz entsprechende und auf einer Netzwerkidentifizierung (SSID₁₁,SSID₁₂/SSID₂₁,SSID₂₂ SSID₃₁,SSID₃₂) basierte Zugangskontrolle zu konfigurieren.

13. System nach Anspruch 12, **dadurch gekennzeichnet, dass** das Frequenzkonfigurationsmodul ausschliesslich Mittel umfasst zur Erfassung von Betriebsdaten von einem oder mehreren Access Points (AP1/AP2/AP3).

14. System nach einem der Ansprüche 12 bis 13, **dadurch gekennzeichnet, dass** das Frequenzkonfigurationsmodul Mittel umfasst zur Erfassung von mindestens einer aktuellen Trägerfrequenz und/oder einer Benutzungsrate und/oder einer Störungsrate und/oder einer Benutzungswahrscheinlichkeit von einem oder mehreren Access Points (AP1/AP2/AP3) und/oder von Endgeräten (MT1/MT2).

15. System nach einem der Ansprüche 12 bis 14, **dadurch gekennzeichnet, dass** ein oder mehrere Access Points (AP1/AP2/AP3) und/oder Endgeräte (MT1/MT2) Mittel umfassen zur Messung eines Frequenzspektrums.

16. System nach einem der Ansprüche 12 bis 15, **dadurch gekennzeichnet, dass** ein oder mehrere Access Points (AP1/AP2/AP3) Mittel umfassen zur Konfiguration einer auf mindestens einem Service Set Identifier (SSID) basierten Zugangskontrolle.

17. System nach einem der Ansprüche 12 bis 16, **dadurch gekennzeichnet, dass** ein oder mehrere Access Points (AP1/AP2/AP3) und Endgeräte (MT1/MT2) Mittel umfassen zur Verschlüsselung der Netzwerkidentifzierung (SSID₁₁,SSID₁₂/ SSID₂₁,SSID₂₂ SSID₃₁,SSID₃₂) mittels mindestens einem elektronischen Schlüssel sowie zur Entschlüsselung einer verschlüsselten Netzwerkidentifizierung.

18. System nach einem der Ansprüche 12 bis 17, **dadurch gekennzeichnet, dass** ein oder mehrere Access Points (AP1/AP2/AP3) Mittel umfassen zur Markierung von einer Netzwerkidentifizierung (SSID₁₁,SSID₁₂/SSID₂₁,SSID₂₂ SSID₃₁,SSID₃₂) zugeordneten Datenpaketen mit einem QoS Tag oder VLAN Tag.

19. System nach einem der Ansprüche 11 bis 18, **dadurch gekennzeichnet, dass** ein oder mehrere Access Points (AP1/AP2/AP3) Mittel umfassen zur Übermittlung einer Meldung an ein Endgerät (MT1/MT2) über Access Points (AP1/AP2/AP3), welche vom Endgerät (MT1/MT2) potentiell zugreifbar sind.

20. System nach einem der Ansprüche 11 bis 19, **dadurch gekennzeichnet, dass** ein oder mehrere Access Points (AP1/AP2/AP3) Mittel umfassen zur gleichzeitigen Konfiguration von mehreren Trägerfrequenzen sowie von entsprechenden Zugangskontrollen für den Zugriff von Endgeräten (MT1/MT2) auf den Access Point (AP1/AP2/AP3).

21. System nach einem der Ansprüche 11 bis 20, **dadurch gekennzeichnet, dass** das Frequenzkonfigurationsmodul Mittel umfasst, um basierend auf Betriebsdaten eines Access Points (AP1/AP2/AP3) und/oder von Betriebsdaten von Endgeräten (MT1/MT2) eine bestimmbare Trägerfrequenz abzuschalten.

22. System nach einem der Ansprüche 11 bis 21, **dadurch gekennzeichnet, dass** das Frequenzkonfigurationsmodul Mittel umfasst, um auf einem Access Point (AP1/AP2/AP3) zu bestimmbaren Zeitpunkten eine temporäre Trägerfrequenz zur Detektion von Endgeräten (MT1/MT2) zu konfigurieren.

## Geänderte Patentansprüche

### Geänderte Patentansprüche gemäss Regel 86(2) EPÜ.

**1.** Verfahren zur dynamischen Konfiguration eines Subnetzwerkes innerhalb eines drahtlosen lokalen Netzwerkes (9), wobei das drahtlose lokale Netzwerk (9) einen oder mehrere von Endgeräten (MT1/MT2) über Funksignale mit bestimmten Trägerfrequenzen (f₁₁,f₁₂/ f₂₁,f₂₂/ f₃₁,f₃₂) zugreifbare Access Points (AP1/AP2/AP3) umfasst, und wobei innerhalb des drahtlosen lokalen Netzwerkes (9) ein durch auf den Access Points (AP1/AP2/AP3) konfigurierte Trägerfrequenzen (f₁₁,f₁₂/ f₂₁,f₂₂/ f₃₁,f₃₂) erzeugtes und/oder durch weitere Funksignale erzeugtes Funkfrequenzspektrum vorhanden ist, **dadurch gekennzeichnet,**
**dass** ein Frequenzkonfigurationsmodul basierend auf Betriebsdaten des einen oder der mehreren Access Points (AP1/AP2/AP3) und/oder von Betriebsdaten von Endgeräten (MT1/MT2) für einen bestimmten Access Point (AP1/AP2/AP3) eine weitere Trägerfrequenz (f₁₁,f₁₂/ f₂₁,f₂₂/ f₃₁,f₃₂) bestimmt und die weitere Trägerfrequenz (f₁₁,f₁₂/ f₂₁,f₂₂/ f₃₁,f₃₂) auf dem bestimmten Access Point (AP1/AP2/AP3) konfiguriert, wobei mittels des Frequenzkonfigurationsmoduls Funkinterferenzen zwischen der weiteren Trägerfrequenz und dem innerhalb des drahtlosen Netzwerkes (9) vorhandenen Funkfrequenzspektrum minimiert werden, und
**dass** der bestimmte Access Point (AP1/AP2/AP3) mittels eines Zugangskonfigurationsmoduls derart konfiguriert wird, dass der bestimmte Access Point (AP1/AP2/AP3) auf der weiteren Trägerfrequenz (f₁₁,f₁₂/ f₂₁,f₂₂/ f₃₁,f₃₂) von Endgeräten (MT1/MT2) nur unter Verwendung einer Netzwerkidentifizierung (SSID₁₁,SSID₁₂/ SSID₂₁,SSID₂₂ SSID₃₁,SSID₃₂) zugreifbar ist.

**2.** Verfahren nach Anspruch 1, **dadurch gekennzeichnet, dass** die weitere Trägerfrequenz (f₁₁,f₁₂/ f₂₁,f₂₂/ f₃₁,f₃₂) ausschliesslich basierend auf Betriebsdaten von Access Points (AP1/AP2/AP3) bestimmt wird.

**3.** Verfahren nach einem der Ansprüche 1 bis 2, **dadurch gekennzeichnet, dass** die weitere Trägerfrequenz (f₁₁ ,f₁₂/ f₂₁, f₂₂/ f₃₁,f₃₂)

**9.** Endgerät (MT1/MT2) mit einer vorkonfigurierten Netzwerkidentifizierung auf dem Access Point eine entsprechende Trägerfrequenz mit einer entsprechenden Zugangskontrolle konfiguriert wird, wobei das Endgerät (MT1/MT2) mit der vorkonfigurierten Netzwerkidentifizierung über die entsprechende Trägerfrequenz auf den Access Point (AP1/AP2/AP3) zugreift.

**10.** Verfahren nach einem der Ansprüche 1 bis 9, **dadurch gekennzeichnet, dass** das Frequenzkonfigurationsmodul basierend auf Betriebsdaten von einem oder mehreren Access Points (AP1/AP2/AP3) und/oder von Betriebsdaten von Endgeräten (MT1/MT2) eine bestimmbare Trägerfrequenz abschaltet.

**11.** Verfahren nach einem der Ansprüche 1 bis 10, **dadurch gekennzeichnet, dass** das Frequenzkonfigurationsmodul auf einem oder mehreren Access Points (AP1/AP2/AP3) zu bestimmbaren Zeitpunkten eine temporäre Trägerfrequenz zur Detektion von Endgeräten (MT1/MT2) konfiguriert.

**12.** System zur dynamischen Konfiguration eines Subnetzwerkes innerhalb eines drahtlosen lokalen Netzwerkes (9), wobei das drahtlose lokale Netzwerk (9) einen oder mehrere von Endgeräten (MT1/MT2) zugreifbare Access Points (AP1/AP2/AP3) umfasst, und wobei innerhalb des drahtlosen lokalen Netzwerkes (9) ein durch auf den Access Points (AP1/AP2/AP3) konfigurierte Trägerfrequenzen (f₁₁,f₁₂/ f₂₁,f₂₂/ f₃₁,f₃₂) erzeugtes und/oder durch weitere Funksignale erzeugtes Funkfrequenzspektrum vorhanden ist, **dadurch gekennzeichnet,**
**dass** ein Frequenzkonfigurationsmodul Mittel umfasst zur Erfassung und Abspeicherung von Betriebsdaten des einen oder der mehreren Access Points (AP1/AP2/AP3) und/oder von Betriebsdaten von Endgeräten (MT1 /MT2),
**dass** das Frequenzkonfigurationsmodul Mittel umfasst zur Bestimmung einer weiteren Trägerfrequenz (f₁₁,f₁₂/ f₂₁,f₂₂/ f₃₁,f₃₂) und zur Konfiguration dieser weiteren Trägerfrequenz auf einem Access Point (AP1/AP2/AP3), wobei mittels des Frequenzkonfigurationsmoduls Funkinterferenzen zwischen der weiteren Trägerfrequenz und dem innerhalb des drahtlosen Netzwerkes (9) vorhandenen Funkfrequenzspektrum minimierbar sind,
**dass** ein Zugangskonfigurationsmodul Mittel zur Konfiguration eines bestimmten Access Points (AP1/AP2/AP3) derart umfasst, dass der bestimmte Access Point (AP1/AP2/AP3) auf der weiteren Trägerfrequenz (f₁₁,f₁₂/ f₂₁,f₂₂/f₃₁,f₃₂) von Endgeräten (MT1/MT2) nur unter Verwendung einer Netzwerkidentifizierung (SSID₁₁,SSID₁₂/ SSID₂₁,SSID₂₂ SSID₃₁,SSID₃₂) zugreifbar ist.

**13.** System nach Anspruch 12, **dadurch gekennzeichnet, dass** das Frequenzkonfigurationsmodul ausschliesslich Mittel umfasst zur Erfassung von Betriebsdaten von einem oder mehreren Access Points (AP1/AP2/AP3).

**14.** System nach einem der Ansprüche 12 bis 13, **dadurch gekennzeichnet, dass** das Frequenzkonfigurationsmodul Mittel umfasst zur Erfassung von mindestens einer aktuellen Trägerfrequenz und/oder einer Benutzungsrate und/oder einer Störungsrate und/oder einer Benutzungswahrscheinlichkeit von einem oder mehreren Access Points (AP1/AP2/AP3) und/oder von Endgeräten (MT1/MT2).

**15.** System nach einem der Ansprüche 12 bis 14, **dadurch gekennzeichnet, dass** ein oder mehrere Access Points (AP1/AP2/AP3) und/oder Endgeräte (MT1/MT2) Mittel umfassen zur Messung eines Frequenzspektrums.

**16.** System nach einem der Ansprüche 12 bis 15, **dadurch gekennzeichnet, dass** ein oder mehrere Access Points (AP1/AP2/AP3) Mittel umfassen zur Konfiguration einer auf mindestens einem Service Set Identifier (SSID) basierten Zugangskontrolle.

**17.** System nach einem der Ansprüche 12 bis 16, **dadurch gekennzeichnet, dass** ein oder mehrere Access Points (AP1/AP2/AP3) und Endgeräte (MT1/MT2) Mittel umfassen zur Verschlüsselung der Netzwerkidentifzierung (SSID₁₁,SSID₁₂/ SSID₂₁,SSID₂₂ SSID₃₁,SSID₃₂) mittels mindestens einem elektronischen Schlüssel sowie zur Entschlüsselung einer verschlüsselten Netzwerkidentifizierung.

**18.** System nach einem der Ansprüche 12 bis 17, **dadurch gekennzeichnet, dass** ein oder mehrere Access Points (AP1/AP2/AP3) Mittel umfassen zur Markierung von einer Netzwerkidentifizierung (SSID₁₁,SSID₁₂/SSID₂₁,SSID₂₂ SSID₃₁,SSID₃₂) zugeordneten Datenpaketen mit einem QoS Tag oder VLAN Tag.

**19.** System nach einem der Ansprüche 11 bis 18, **dadurch gekennzeichnet, dass** ein oder mehrere Access Points (AP1/AP2/AP3) Mittel umfassen zur Übermittlung einer Meldung an ein Endgerät (MT1/MT2) über Access Points (AP1/AP2/AP3), welche vom Endgerät (MT1/MT2) potentiell zugreifbar sind.

**20.** System nach einem der Ansprüche 11 bis 19, **dadurch gekennzeichnet, dass** ein oder mehrere Access Points (AP1/AP2/AP3) Mittel umfassen zur gleichzeitigen Konfiguration von mehreren Trägerfrequenzen sowie von entsprechenden Zugangskontrollen für den Zugriff von Endgeräten (MT1/MT2) auf den Access Point (AP1/AP2/AP3).

**21.** System nach einem der Ansprüche 11 bis 20, **dadurch gekennzeichnet, dass** das Frequenzkonfigurationsmodul Mittel umfasst, um basierend auf Betriebsdaten eines Access Points (AP1/AP2/AP3) und/oder von Betriebsdaten von Endgeräten (MT1/MT2) eine bestimmbare Trägerfrequenz abzuschalten.

**22.** System nach einem der Ansprüche 11 bis 21, **dadurch gekennzeichnet, dass** das Frequenzkonfigurationsmodul Mittel umfasst, um auf einem Access Point (AP1/AP2/AP3) zu bestimmbaren Zeitpunkten eine temporäre Trägerfrequenz zur Detektion von Endgeräten (MT1/MT2) zu konfigurieren.
